# EUROPÄISCHE PATENTANMELDUNG

(11) **EP 0 864 463 A2**
(43) Veröffentlichungstag der Anmeldung: **16.09.1998**
(21) Anmeldenummer: 98104244.3
(22) Anmeldetag: 10.03.1998
(51) Int. Cl.: B60Q 1/26

(54) **Versenkbare Signaleinheit**

(30) Priorität: 12.03.1997 DE 19710089
(71) Anmelder: Volkswagen Aktiengesellschaft, 38436 Wolfsburg (DE)
(72) Erfinder: Strücken, Volker, 38527 Meine (DE)

(57) **Zusammenfassung**

Die vorliegende Erfindung betrifft eine Signaleinrichtung für bevorrechtigte Einsatzfahrzeuge, insbesondere von Polizei, Feuerwehr, Rettungsdienst, THW oder privaten Sicherheitsdiensten, welche an einem Fahrzeugdach, insbesondere mittig, montierbar ist. Hierbei sind Mittel zum Ein- und Ausfahren der Signaleinrichtung (18) in das Fahrzeugdach (10) derart vorgesehen, daß die Signaleinrichtung (18) im eingefahrenen Zustand zwischen einer Dachaußenseite und einem Himmel (14) der Fahrzeuginnenseite zu liegen kommt.

## Beschreibung

Die Erfindung betrifft eine Signaleinrichtung für bevorrechtigte Einsatzfahrzeuge, insbesondere von Polizei, Feuerwehr, Rettungsdienst, THW oder privaten Sicherheitsdiensten, welche an einem Fahrzeugdach, insbesondere mittig, montierbar ist.

Eine derartige Signaleinrichtung ist beispielsweise aus der DE 38 07 684 C2 bekannt, die einen Dachbalken beschreibt, welcher integral ausgebildete Schwachstellen aufweist, damit der Dachbalken bei einem Fahrzeugüberschlag leicht deformierbar ist. Derartige Dachbalken sind fest, beispielsweise auf einem Polizeifahrzeug, montiert und eigenen sich nur für eine permanente Kennzeichnung von bevorrechtigten Einsatzfahrzeugen. Für Zivilfahrzeuge der Polizei sind diese jedoch ungeeignet, da es gerade die Zweckbestimmung von Zivilfahrzeugen ist, ggf. nicht sofort als Polizeifahrzeug erkannt zu werden. Andererseits ist es in bestimmten Einsatzsituationen notwendig, daß das Zivilfahrzeug als im Einsatz befindliches Fahrzeug mit den entsprechenden Bevorrechtigungen erkennbar ist.

Es ist aus der DE 36 31 578 C1 bekannt, ein Dachzeichen auf einem Fahrzeugdach umklappbar vorzusehen. Dies ist jedoch für die Kennzeichnung von Zivilfahrzeugen ungeeignet, da auch das umgeklappte Dachzeichen von außen erkennbar bleibt.

Aus der DE 30 19 572 A1 ist eine Teleskop-Warnlampe bekannt, welche in ein Fahrzeugdach teleskopartig hinein- bzw. herausdrückbar ist. Die teleskopartige Anordnung macht jedoch diese bei Blick von Außen in den Fahrgastraum erkennbar, da die eingefahrene Warnlampe deutlich in den Fahrzeuginnenraum ragt. Dies verursacht ferner ein unvertretbares Verletzungsrisiko für Fahrzeuginsassen. Deshalb lehrt die DE 30 19 572 A1, die teleskopartige Warnlampe unbedingt an einem seitlichen Holm anzubringen. Dies ist jedoch für die Kennzeichnung von Einsatzfahrzeugen mit Sonderberechtigungen nicht möglich, da diese Kennzeichnung mittig am Fahrzeugdach vorzusehen ist.

Der vorliegenden Erfindung liegt daher die Aufgabe zugrunde, eine Signaleinrichtung der obengenannten Art zur Verfügung zu stellen, wobei die obengenannten Nachteile überwunden werden und eine Kennzeichnung von Einsatzfahrzeugen geschaffen wird, welche nach Bedarf nicht sofort erkennbar ist.

Diese Aufgabe wird erfindungsgemäß durch eine Signaleinrichtung der o. g. Art mit den in Anspruch 1 gekennzeichneten Merkmalen gelöst.

Dazu ist es erfindungsgemäß vorgesehen, daß Mittel zum Ein- und Ausfahren der Signaleinrichtung in das Fahrzeugdach derart vorgesehen sind, daß die Signaleinrichtung im eingefahrenen Zustand zwischen einer Dachaußenseite und einem Himmel der Fahrzeuginnenseite zu liegen kommt.

Dies hat den Vorteil einer verbesserten Aerodynamik, wobei keine Behinderung der Fahrzeuginsassen durch in den Fahrgastraum ragen Teilen auftritt. Ferner sind Zivileinsatzfahrzeuge der Polizei auch bei Blick in den Fahrgastraum getarnt und nicht erkennbar.

In einer besonders vorteilhaften Ausführungsform schließt die Signaleinrichtung im eingefahrenen Zustand bündig mit einer Dachaußenseite ab und die Signaleinrichtung ist im eingefahrenen Zustand vorzugsweise durch den Himmel der Fahrzeuginnenseite abgedeckt.

Die Mittel zum Ein- und Ausfahren sind in vorteilhafter Weise elektrische Mittel. Dies ermöglicht eine einfache Bedienung des Ein- und Ausfahrens beispielsweise per Knopfdruck von der Dachkonsole aus.

Zweckmäßigerweise ist die Signaleinrichtung eine Warn- oder Informationseinrichtung oder ein Dachbalken.

Hierbei ist es von Vorteil, wenn die Signaleinrichtung wenigstens an einer Seitenfläche Leuchtdioden (LED) aufweist, mit denen ein Warnsignal oder eine Information vermittelbar sind. LED's sind sehr klein und trotzdem sehr lichtstark, mit einer Höhe von beispielsweise 2 bis 3 cm.

Ein einfacher und kostengünstig montierbarer Aufbau ergibt sich dadurch, daß die Mittel zum Ein- und Ausfahren derart ausgebildet sind, daß sie in einen vorhandenen Dachausschnitt, beispielsweise für ein Schiebeaufstelldach, integrierbar sind.

In vorteilhafter Weise weist dabei die Signaleinrichtung seitliche Rundumkennleuchten sowie vorzugsweise vordere und hintere, mit Leuchtdioden bestückte Schriftfelder für Hinweise auf.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: einen Teil eines Kraftfahrzeuges mit erfindungsgemäßer Signaleinrichtung in seitlicher Schnittansicht,
- Fig. 2A: ein Kraftfahrzeug mit eingefahrener erfindungsgemäßer Signaleinrichtung in Rückansicht,
- Fig. 2B: ein Kraftfahrzeug mit ausgefahrener erfindungsgemäßer Signaleinrichtung in Rückansicht und
- Fig. 3: einen Teil eines Fahrzeugdaches mit erfindungsgemäßer Signaleinrichtung in seitlicher Schnittansicht.

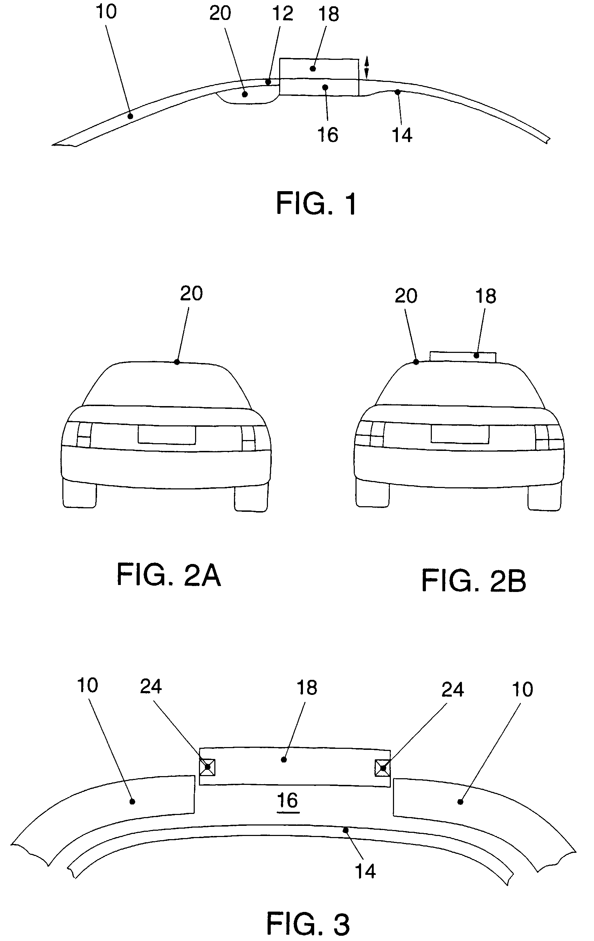

Fig. 1 zeigt einen Teil eines Kraftfahrzeuges mit Frontscheibe 10, Dach 12 und Himmel 14. Das Dach 12 weist eine Öffnung 16 auf, in die eine erfindungsgemäße Signaleinrichtung 18 in Pfeilrichtung 19 versenkbar bzw. ausfahrbar ist. In der Darstellung von Fig. 1 ist die Signaleinrichtung 18 ausgefahren.

Als Öffnung 18 kann vorzugsweise ein bereits hinter einer Konsole 20 ausgebildeter Ausschnitt für ein Schiebedach verwendet werden. Beispielsweise bei einem SAD-Dach ist hierbei bereits ein geeigneter SAD-Formhimmel vorhanden, der eine entsprechende Öffnung zur Aufnahme der Signaleinrichtung bildet. An der Konsole 20 ist zweckmäßigerweise ein nicht näher dargestelltes Bedienelement zur Betätigung des Ein- und Ausfahrens angeordnet. Ein Himmel 14 des Fahrgastinnenraumes ist derart geführt, daß er die eingefahrene Position der Signaleinrichtung überdeckt.

In eingefahrenem Zustand schließt die Signaleinrichtung 18 bündig mit einer Außenseite des Daches 12 ab und ist somit nicht sichtbar. Dies ist in Fig. 2A dargestellt. Beispielsweise eine Polizeifahrzeug ist somit getarnt und auch bei einem Blick in den Fahrgastraum nicht als solches erkennbar, da die eingefahrene Signaleinrichtung 18 vom Himmel 14 verdeckt ist.

Die Führung des Himmel 14 ist dabei derart, daß im Bereich der eingefahrenen Signaleinrichtung 18 keine verräterische Beule entsteht, sondern eine gleichmäßige Oberseite für den Fahrgastraum gebildet ist. Dies ist in Fig. 3 entsprechend dargestellt. Zu diesem Zweck ist der Himmel 14 beispielsweise insgesamt entsprechend abgesenkt.

Fig. 2B zeigt sie Signaleinrichtung 18 am Fahrzeug in ausgefahrenem Zustand. Hier dient sie als Kenntlichmachung des Kraftfahrzeugs als Einsatzfahrzeug mit entsprechenden Sonderberechtigungen oder teilt über ein LED-Feld einem voraus fahrenden oder nachfolgenden Fahrzeug Informationen mit, wie beispielsweise "POLIZEI", "FOLGEN" oder ähnliches mit.

In der Ausführungsform von Fig. 3 ist die Signaleinrichtung ein Dachbalken 18 mit seitlichen LED's 24 als Rundumleuchten, beispielsweise als Blaulicht zum Kennzeichnen des Kraftfahrzeuges als ein im Einsatz mit entsprechenden Bevorrechtigungen befindliches Polizeifahrzeug.

### BEZUGSZEICHENLISTE

- 10: Frontscheibe
- 12: Dach
- 14: Himmel
- 16: Öffnung
- 18: Signaleinrichtung
- 19: Pfeil
- 20: Konsole
- 24: seitlichen LED's

## Patentansprüche

1. Signaleinrichtung für bevorrechtigte Einsatzfahrzeuge, insbesondere von Polizei, Feuerwehr, Rettungsdienst, THW oder privaten Sicherheitsdiensten, welche an einem Fahrzeugdach, insbesondere mittig, montierbar ist,
dadurch gekennzeichnet, daß
Mittel zum Ein- und Ausfahren der Signaleinrichtung (18) in das Fahrzeugdach (10) derart vorgesehen sind, daß die Signaleinrichtung (18) im eingefahrenen Zustand zwischen einer Dachaußenseite und einem Himmel (14) der Fahrzeuginnenseite zu liegen kommt.

2. Signaleinrichtung nach Anspruch 1,
dadurch gekennzeichnet, daß
die Signaleinrichtung (18) im eingefahrenen Zustand bündig mit einer Dachaußenseite abschließt.

3. Signaleinrichtung nach Anspruch 1 oder 2,
dadurch gekennzeichnet, daß
die Signaleinrichtung (18) im eingefahrenen Zustand durch den Himmel (14) der Fahrzeuginnenseite abgedeckt ist.

4. Signaleinrichtung nach einem der vorhergehenden Ansprüche,
dadurch gekennzeichnet, daß
die Mittel zum Ein- und Ausfahren elektrische Mittel sind.

5. Signaleinrichtung nach einem der vorhergehenden Ansprüche,
dadurch gekennzeichnet, daß
die Signaleinrichtung (18) eine Warn- oder Informationseinrichtung oder ein Dachbalken ist.

6. Signaleinrichtung nach einem der vorhergehenden Ansprüche,
dadurch gekennzeichnet, daß
die Signaleinrichtung (18) wenigstens an einer Seitenfläche Leuchtdioden (24) aufweist, mit denen ein Warnsignal oder eine Information vermittelbar sind.

7. Signaleinrichtung nach einem der vorhergehenden Ansprüche,
dadurch gekennzeichnet, daß
die Mittel zum Ein- und Ausfahren derart ausgebildet sind, daß sie in einen vorhandenen Dachausschnitt (16), beispielsweise für ein Schiebeaufstelldach (SAD-Dach), integrierbar sind.

8. Signaleinrichtung nach einem der vorhergehenden Ansprüche,
dadurch gekennzeichnet, daß
die Signaleinrichtung (18) seitliche Rundumkennleuchten (24) aufweist.

9. Signaleinrichtung nach einem der vorhergehenden Ansprüche,
dadurch gekennzeichnet, daß
die Signaleinrichtung (18) vordere und hintere, mit Leuchtdioden bestückte Schriftfelder für Hinweise aufweist.
